# EUROPEAN PATENT SPECIFICATION

(11) **EP 1 284 076 B1**
(45) Date of publication and mention of the grant of the patent: **26.07.2006**
(21) Application number: 01930369.2
(22) Date of filing: 03.05.2001
(51) Int. Cl.: H04L 29/06

(54) **IPSEC PROCESSING**
IPSEC-VERARBEITUNG
TRAITEMENT DU PROTOCOLE IPSEC

(30) Priority: 24.05.2000 GB 0012475
(43) Date of publication of application: 19.02.2003
(73) Proprietor: TELEFONAKTIEBOLAGET LM ERICSSON (publ), 164 83 Stockholm (SE)
(72) Inventor: LINDBORG, Seppo, FIN-01510 Vantaa (FI); TURTIAINEN, Esa, FIN-02360 Espoo (FI); SCHULTZ, Göran, FIN-21600 Pargas (FI); KÄRNÄ, Juha-Petri, FIN-02100 Espoo (FI); LINNAKANGAS, Tommi, FIN-00370 Helsinki (FI)
(74) Representative: Norin, Klas
(86) International application number: PCT/SE2001/000960
(87) International publication number: WO 2001/091413

(56) References cited:
- WO-A-99/67930
- THAYER R: "BULLETPROOF IP WITH AUTHENTICATION AND ENCRYPTION, IPSEC ADDS A LAYER OF ARMOR TO IP" DATA COMMUNICATIONS,US,MCGRAW HILL. NEW YORK, vol. 26, no. 16, 21 November 1997 (1997-11-21), pages 55-58,60, XP000723268 ISSN: 0363-6399

## Description

### Field of the Invention

The present invention relates to IPSec processing and in particular, though not necessarily, to IPSec processing at intermediate networking devices such as routers.

### Background to the Invention

IPSec (Internet Protocol Security) is a set of protocols defined by the Internet Engineering Taskforce (RFC2401) which provides a security mechanism for IP and certain upper layer protocols such as UDP and TCP. IPSec protects IP packets (or more specifically IPSec packets) and upper layer protocols during transmission between peer nodes by introducing proof of origin and encryption.

One of the IPSec protocols is known as "Encapsulating Security Payload" (ESP) and provides confidentiality, data integrity, and data source authentication of IP packets. This requires the insertion of an ESP header after the IP header of an IP packet but in front of the data to be protected. An ESP trailer is inserted after the data to be protected. An ESP packet is identified in the protocol field of the IP header. An alternative protocol to ESP is known as "Authentication Header" (AH).

In order to allow IPSec packets to be properly encapsulated and decapsulated it is necessary to associate security services and a key between a node from which the traffic being transmitted and the remote node which is the intended recipient of the traffic. The construct used for this purpose is a "Security Association" (SA). SAs are negotiated between peer nodes using a mechanism known as "Internet Key Exchange" (IKE), and are allocated an identification known as a "Security Parameter Index" (SPI). The appropriate SA is identified to the receiving node by including the corresponding SPI in the ESP (or AH) header. Details of the existing SAs and the respective SPIs are maintained in a Security Association Database (SAD) which is associated with each IPSec node.

Such an IPSEC system is disclosed in WO99167930.

The precise way in which IPSec is implemented in a system depends to a large extent upon the security policy of the organisation wishing to employ IPSec. For example, the organisation may specify end-points (e.g. user terminals) to which IP packets may be sent, or from which they may be received, the particular security levels to be used for encrypting packets, etc. Policy is stored in a Security Policy Database (SPD) which is also associated with each IPSec node. Typically, the SPD is distributed amongst a plurality of entities of the IPSec node.

### Summary of the Invention

In the case of intermediate networking devices, e.g. routers, there is a requirement for the throughput of a high volume of traffic. The implementation of IPSec at such devices should not result in any serious deterioration of the throughput rates. This is best achieved by handling IPSec traffic using a plurality of IPSec processors operating in parallel. Parallel processing may also be advantageously employed to handle IPSec at end nodes.

According to a first aspect of the present invention there is provided a network device for implementing IPSec and comprising:
at least one IP forwarder arranged to receive IP packets each of which is associated with a Security Association (SA), to determine the destinations of the packets, and to forward the packets to their destinations;
a plurality of security procedure modules coupled to the IP forwarder(s) and arranged to implement security procedures for received IP packets in parallel; and
a security controller arranged to allocate negotiated SAs amongst the security procedure modules and to notify the security procedure modules and the IP forwarder(s) of the allocation, whereby the IP forwarder(s) can send IP packets to the security procedure module implementing the associated SA.

Embodiments of the present invention provide an efficient mechanism for handling multiple SAs in parallel, such as is required for a high throughput IP router. The mechanism seeks to minimise the modifications required to existing IPSec protocols and hardware. The network device in which the invention is employed may be, for example, an intermediate networking device (e.g. a router) or an end node (i.e. host).

In certain embodiments of the present invention the security procedure modules are coupled together to allow the forwarding of an IP packet from one security procedure module to another.

Preferably, the security controller is responsible for creating and modifying IP packet filters in the IP forwarder(s), wherein the filters are responsible for routing IP packets to the security procedure modules. Filtering of packets is carried out using one or more selectors. More preferably, one of the selectors is the Security Parameter Index (SPI) which identifies a SA and which is contained in a header of the IP packets.

Preferably, the security controller is coupled to an Internet Key Exchange (IKE) module which is responsible for negotiating SAs with peer IKE modules. The security controller is arranged to receive from the IKE module details of negotiated SAs.

It will be appreciated that the IP forwarder(s), security procedure modules, and/or security controller may be implemented in software or in hardware, or in a combination of hardware and software.

According to a second aspect of the present invention there is provided a method of processing IP packets at a network device, the method comprising:
allocating negotiated SAs amongst a plurality of security procedure modules arranged to implement security procedures for received IP packets;
notifying the security procedure modules and at least one IP forwarder of said allocation; and
receiving IP packets at the IP forwarder(s), identifying the SAs associated with the packets, and forwarding the packets to the security procedure modules implementing the associated SAs.

### Brief Description of the Drawings

Figure 1 illustrates schematically a Virtual Private Network (VPN) comprising an intranet;
Figure 2 illustrates schematically the architecture of a router of the VPN of Figure 1; and
Figure 3 is a flow diagram illustrating a method of processing packets at the router of Figure 2.

### Detailed Description of a Preferred Embodiment

The method which will now be described makes use of features described in the following documents: [IPsec] RFC 2401, Security Architecture for the Internet Protocol, November 1998; [REKEY] Internet Draft, IPsec Re-keying Issues; [IKE] RFC 2409, The Internet Key Exchange (IKE), November 1998; [ISAKMP] RFC 2408, Internet Security Association and Key Management Protocol, November 1998; [INTDOI] RFC 2407, The Internet Security Domain of Interpretation for ISAKMP, November 1998. Reference should be made to these documents for a fuller understanding of the method.

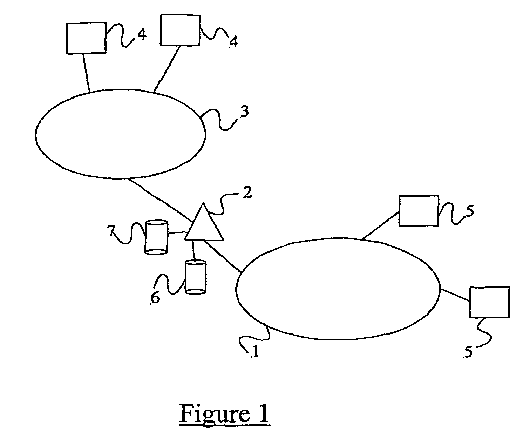

Figure 1 illustrates a typical scenario where IPSec may be used. A corporate Local Area Network (LAN) 1 is connected via a router/firewall 2 to the Internet 3. Remote hosts 4 may connect to the router 2 via the Internet 3. By using IPSec to control communication between the router 2 and the remote hosts 4 (and hence between remote hosts 4 and local hosts 5), a Virtual Private Network (VPN) may be established. Each remote host 4 wishing to participate in the VPN must negotiate at least one pair of SAs (one for sending data and one for receiving data) with the router 2 prior to exchanging user generated traffic with the LAN 5. Negotiation is carried out using IKE in accordance with security policy defined in a Policy Database (PD) 6 (nb. the PD may actually be distributed amongst the various IPSec entities of the router 2). The result is that for each remote host 4 participating in the VPN the router 2 maintains a set of SAs in its Security Association Database (SAD) 7 which may also be a distributed database.

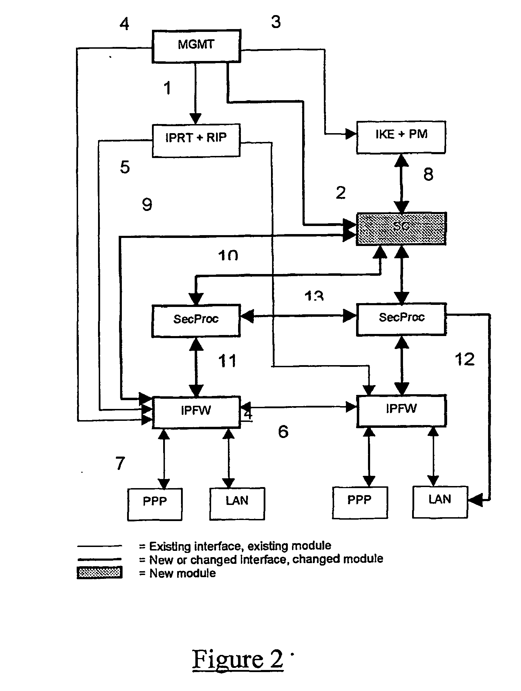

Figure 2 illustrates the IPSec architecture used by the router 2. Each of the components of this architecture will now be described in turn.

### MGMT

A Management module (MGMT) handles the distribution of all management information. This information includes static IP routes (1), manual IPSec SAs and IPSec policies (2), IKE policies (3) and IP filter information (4). The MGMT module is an existing module although some changes are likely to be necessary in order to implement this embodiment of the invention. The distribution of IPSec policies, for example, must be changed from the former IPFW/IPSec modules to the new Security Controller module (see below). The Security Controller module might also need other management information to perform its functionalities.

### IPRT

An IP routing process (IPRT) module manages all IP routing information in the system. This module distributes the routes to all IP forwarders (IPFW) and it receives routes either from the MGMT module or through dynamic routing protocols (e.g. RIP). No changes are needed to the existing IPRT module.

### IPFW

A set of IP forwarder (IPFW) modules make the decisions as to where each individual packet is sent inside the system. These modules have responsibility for matching each packet against IP filters (see below), for identifying the local routing information for the destination of the packets, and for forwarding the packets towards their destinations. The destination can be some interface process (e.g. LAN or PPP), local UDP/TCP/ICMP/etc. handling process, or another IPFW.

In order to enhance the IPFW module to handle the distributed IPSec processing mechanism described here, certain changes have to be made and features added. An IPFW module has to know whether IPSec processing is needed for a packet or not. One way of introducing IPSec handling into IPFW is by using IP filters. The Security Controller (SC) module therefore dynamically introduces special IP filters into the IPFW modules. These filters match the "selectors" in the packets according to the IPSec policy that is deployed. The filter points to the security processor (SecProc) that handles the IPSec processing for a packet. Thus, by making only a relatively minor modification to the filtering mechanism in the IPFW modules, all packets that need IPSec processing can be routed to SecProcs. The SC module updates the filter data so that the SecProc allocation is always correct. The SC module always assigns some SecProc to filters as the default SecProc used by the IPFW module. If no SAs exist, the default SecProc is used for handling packets and it is then that SecProc's responsibility to figure out how to get a new SA created.

The filters in the IPFWs must have a Security Parameter Index (SPI) as one of the selectors. With SPI as the selector, the incoming IPSec packets can be routed to the right SecProcs. All incoming IPSec packets (destined to the router itself) that do not match the IPSec filter can be dropped.

It will be appreciated that in the mechanism described here, an IPFW module does not need access to either the SAD or SPD. Rather, it only makes decisions based on IP filtering mechanisms. In this way the changes in IPFW can be kept to a minimum. If IPFW is implemented in hardware, the only changes that are needed are:
the introduction of IPSec selectors into the filtering mechanism; and
a change in the packet forwarding path to the SecProc.

### PPP/LAN

Device processes, like PPP or LAN, feed the IPFW modules with packets. They also receive routed packets from the IPFW modules. The device processes do not have to have any knowledge of IPSec. Device processes do not need any changes in order to implement the mechanism described here.

### IKE

As will be apparent from the above discussion, the Internet Key Exchange (IKE) module takes care of SA negotiations with other nodes in the VPN. The IKE module stores IKE policies and negotiates IKE SAs in according with these policies. The IKE module communicates with the SC module using an enhanced PF_KEY v2 interface (8). The IKE module does not have IPSec policies but makes queries to the SC module about IPSec connections. The two scenarios in which the IKE module may be involved are a first in which the IKE module initiates IPSec SA negotiation and a second in which the IKE module responds to an initiation request from a peer IKE module (of another IPSec node).

### IKE module as initiator:

1) IKE module receives IPSec SA negotiation requests from SC module;
2) IKE module checks whether the request is allowed according to IKE policies available;
3) IKE module negotiates IPSec SAs with the peer IKE module; and
4) IKE module gives resulting IPSec SAs back to SC module.

### TKE module as responder:

1) IKE module receives negotiation requests from peer IKE module;
2) IKE module checks whether the request is allowed according to IKE policies available;
3) IKE module asks SC module whether the proposed IPSec connection is allowed according to IPSec policies available;
4) IKE module negotiates IPSec SAs with the peer IKE module; and
5) IKE module gives new IPSec SAs to SC module.

The IKE process with policy manager (PM) should not need any changes, except in so far as the PF_KEY is used to interface with the SC, i.e. not IPFW/IPSec directly.

### SC

The Security controller (SC) module handles the distribution of IPSec SAs to different SecProc modules. It stores the IPSec policies (2) and knows in which SecProc modules all IPSec SAs are located. When new SAs are created, the SC module selects the SecProc modules into which the SAs are placed (10). The SC module also installs the following types of IP filters into the IPFW modules.

The filters that specify IPSec policies for outgoing packets; these filters select the SecProcs that handle IPSec processing. These filters are installed when IPSec policies are created. They are removed only if IPSec policies are removed or the configuration changes so that the IPFW module does not have to take care of packets that match the existing IPSec policies. A further set of filters are employed which match the outgoing IPSec SAs. These filters allow packets to be sorted within a given SA and pre-defined actions taken for the sorted packets.

The filters that match to incoming IPSec packets, each incoming IPSec SA requires filters in those IPFW modules that need to handle IPSec packets with the SA (some specific SPI-destination address pair). These filters are only installed when the SAs are created or if the configuration changes so that the IPFW module does not have to take care of packets that match the SAs created according to the existing IPSec policies.

Every time new SAs are created or old SAs deleted, the SC module has to update information in the IPFW modules (9). More particularly, the SC module updates IP filter information so that the filters point to the SecProc that owns the SA or, if no SA exists at the moment, the filters point to the default SecProc.

The procedure by which the SC selects suitable SecProc modules is affected by some properties in SecProcs. For example, the SC module needs to know how much load the SecProc modules have in the system. In order to distribute IPSec processing as evenly as possible between different processors of the boards in the system, the SC module should select the SecProc module that has the least load at the time of SA creation. Of course, the SC module should be aware of different penalties the system introduces when sending packets from process to process. For example, if packets are sent between processes that are located on different cards, the penalty is much bigger than that where packets are sent between processes in the same card (depending on the overall system architecture of course).

The SC module should be capable of redistributing SAs if the system load changes drastically. Also, the SC module needs to access the SPD for IPSec policies and the SAD for all SAs. The SC module is a completely new module in this architecture.

### SecProc

The SecProc modules can be seen as the main modules in IPSec packet handling. They require access to both IPSec SAD and SPD as it is SecProcs' responsibility to do all IPSec policy look-ups and make decisions on how or who should do the IPSec processing.

A SecProc module is a process that actually executes IPSec encryption, decryption and authentication - using either software or some dedicated hardware. It has information about the SAs it has to handle. It stores the SA and all information needed in processing, like sequence number counters, statistics and what algorithms and keys to use.

A SecProc module must also know which SecProc modules handle the other SAs. This is important if SA bundles are used (see below). A SecProc module might need to forward the packet to another SecProc module (13) that handles other SAs. As the SecProc module has access to IPSec policy and SA information, this module can see what are the SAs that need to be deployed for a given policy. The first SecProc module that processes a packet must tell the next SecProc module what is the path for the packet (the following SecProc module and SAs, SA-SecProc pairs). Each SecProc module then removes its own pairs (when it has processed the packet) and forwards the packet to the next SecProc module. The advantage of this procedure is that the policy look-up is only done once (by the first SecProc module).

In some circumstances multiple levels of security may be applied to IPSec packets. This results in a "bundle" of SA for given communication. If all IPSec processing is done using only software, it is better to handle each SA in a bundle using the same SecProc module. Unnecessary packet forwarding is thus avoided. On the other hand, if dedicated hardware is used, there might be problems in handling all SAs in one SecProc module. For example, if a SecProc module uses the hardware that is only capable of doing some of the algorithms needed in the bundle, that SecProc module cannot be used to handle the whole SA bundle.

It might be wise to use only one SecProc module for all SAs that need some specific algorithm combination that can be handled by some hardware. In this way the hardware can be used most efficiently.

It is the SC module's responsibility to determine the correct SA distribution across the SecProc modules. Each SecProc module needs to register with the SC module. During the registration process, the SecProc module tells the SC module what it is capable of (algorithms, key lengths etc.).

A SecProc module always receives IP packets either from another SecProc module (i.e. in the case of a SA bundle or the where an IPFW module has sent packets to the wrong SecProc module and that SecProc module forwards the packets to the correct SecProc module) or from an IPFW module. A SecProc module needs to be able to forward the IP packets to the correct IPFW module (or device process, PPP, LAN) after IPSec processing. A SecProc module can have a default IPFW module to which all packets are forwarded. The SC module has to set this IPFW module, which knows how the packet is forwarded. It is also possible to allow the SecProc module to make the forwarding decision itself (routing tables). This enables the SecProc module to send the packets directly to some device process if that process is visible to the SecProc module. Thus, one forwarding step can be avoided.

The current combined IPFW/IPSec module is separated into an IPFW module and an IPSec module, i.e. a SecProc module.

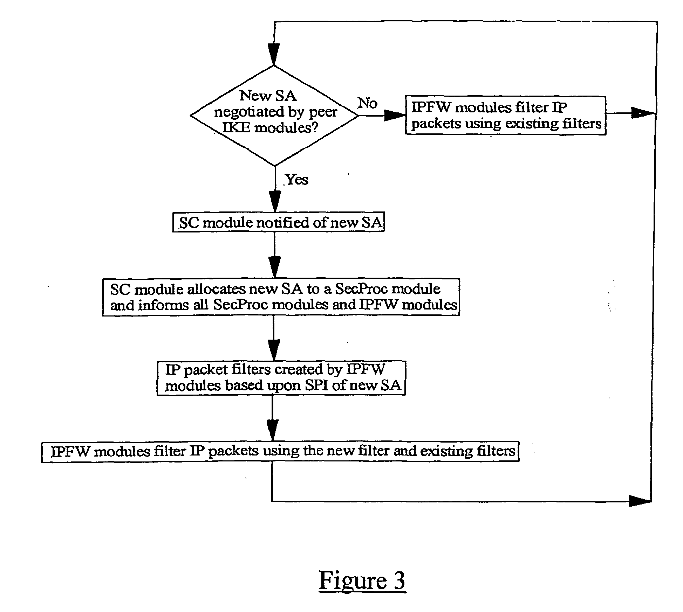

Figure 3 is a flow diagram further illustrating the method of operation of the IPSec router.

It will be appreciated by the person of skill in the art that various modifications may be made to the above described embodiments without departing from the scope of the present invention.

## Claims

1. A network device for implementing IPSec and comprising:
at least one IP forwarder arranged to receive IP packets each of which is associated with a Security Association (SA), to determine the destinations of the packets, and to forward the packets to their destinations;
a plurality of security procedure modules coupled to the IP forwarder(s) and arranged to implement security procedures for received IP packets in parallel; and
a security controller arranged to allocate negotiated SAs amongst the security procedure modules and to notify the security procedure modules and the IP forwarder(s) of the allocation, whereby the IP forwarder(s) can send IP packets to the security procedure module implementing the associated SA.

2. A device according to claim 1, wherein the security procedure modules are coupled together to allow the forwarding of an IP packet from one security procedure module to another.

3. A device according to claim 1 or 2, wherein the security controller is responsible for creating and modifying IP packet filters in the IP forwarder(s), wherein the filters are responsible for routing IP packets to the security procedure modules.

4. A device according to claim 3, wherein the filtering of packets is carried out using one or more selectors, the or one of the selectors being the Security Parameter Index (SPI) which identifies a SA and which is contained in a header of the IP packets.

5. A device according to any one of the preceding claims, wherein the security controller is coupled to an Internet Key Exchange (IKE) module which is responsible for negotiating SAs with peer IKE modules, and the security controller is arranged to receive from the IKE module details of negotiated SAs.

6. A device according to any one of the preceding claims, wherein the IP forwarder(s), security procedure modules, and/or security controller are implemented in software or in hardware, or in a combination of hardware and software.

7. A method of processing IP packets at a network networking device, the method comprising:
allocating in a security controler negotiated security associations, SAs, amongst a plurality of security procedure modules arranged to implement security procedures for received IP packets in parallel;
notifying the security procedure modules and at least one IP forwarder of said allocation; and
receiving IP packets at the IP forwarder(s), identifying the SAs associated with the packets, and forwarding the packets to the security procedure modules implementing the associated SAs.

## Patentansprüche

1. Netzwerkvorrichtung zum Implementieren von IPSec, umfassend:
zumindest einen IP-Forwarder, der dafür eingerichtet ist, IP-Pakete zu empfangen, von denen jedes mit einer Sicherheits-Assoziierung (SA) assoziiert ist, um die Destinationen der Pakete zu bestimmen und die Pakete an ihre Destinationen weiterzuleiten;
eine Mehrzahl von Sicherheitsprozedurmodulen, die mit dem/den IP-Forwarder(n) gekoppelt und dafür eingerichtet sind, Sicherheitsprozeduren für empfangene Pakete parallel zu implementieren; und
eine Sicherheitssteuerung, die dafür eingerichtet ist, vermittelte SAs unter den Sicherheitsprozedurmodulen zu allozieren und die Sicherheitsprozedurmodule und den/die IP-Forwarder von der Allozierung zu unterrichten, wodurch der/die IP-Forwarder IP-Pakete an das die assoziierte SA implementierende Sicherheitsmodulmodul senden kann.

2. Vorrichtung gemäß Anspruch 1, wobei die Sicherheitsprozedurmodule miteinander gekoppelt sind, um das Weiterleiten eines IP-Pakets von einem Sicherheitsprozedurmodul zu einem anderen zu gestatten.

3. Vorrichtung gemäß Anspruch 1 oder 2, wobei die Sicherheitssteuerung für das Erzeugen und Modifizieren von IP-Paketfiltern in dem/den IP-Forwarder(n) verantwortlich ist, wobei die Filter für das Routen von IP-Paketen an die Sicherheitsprozedurmodule verantwortlich sind.

4. Vorrichtung gemäß Anspruch 3, wobei das Filtern von Paketen unter Verwendung eines oder mehrerer Selektoren ausgeführt wird, wobei der oder einer der Selektoren der Sicherheitsparameterindex (SPI) ist, der eine SA identifiziert und der in einem Kopf der IP-Pakete enthalten ist.

5. Vorrichtung gemäß einem der vorstehenden Ansprüche, wobei die Sicherheitssteuerung mit einem Internet-Schlüssellaustauschmodul (ISA) gekoppelt ist, das für das Vermitteln von SAs mit Gleichrang-ISA-Modulen verantwortlich ist, und die Sicherheitssteuerung dafür eingerichtet ist, vom ISA-Modul Details zu den vermittelten SAs zu empfangen.

6. Vorrichtung gemäß einem der vorstehenden Ansprüche, wobei der/die IP-Forwarder, die Sicherheitsprozedurmodule, und/oder die Sicherheitssteuerung in Software oder in Hardware oder in einer Kombination von Hardware und Software implementiert sind.

7. Verfahren zum Prozessieren von IP-Paketen in einer Netzwerkvernetzungsvorrichtung, das umfasst:
Allozierung von vermittelten Sicherheitsassoziierungen SAs in einer Sicherheitssteuerung, unter einer Mehrzahl von Sicherheitsprozedurmodulen, die dafür eingerichtet sind, Sicherheitsprozeduren für empfangene IP-Pakete parallel zu implementieren;
Unterrichten der Sicherheitsprozedurmodule und zumindest eines IP-Forwarders von der Allozierung; und
Empfangen von IP-Paketen an dem/den IP-Forwardern, Identifizieren der mit den Paketen assoziierten SAs und Weiterleiten der Pakete an die, die assoziierten SAs implementierenden Sicherheitsprozedurmodule.

## Revendications

1. Dispositif pour mettre en oeuvre le protocole IPSec (IP sécurisé) et comprenant :
au moins un réexpéditeur IP conçu pour recevoir des paquets IP dont chacun est associé à une Association de Sécurité (SA), pour déterminer les destinations des paquets et pour réexpédier les paquets vers leurs destinations ;
une pluralité de modules à procédure de sécurité reliés au(x) réexpéditeur(s) IP et conçus pour mettre en oeuvre des procédures de sécurité pour des paquets IP reçus en parallèle ; et
une unité de commande de sécurité conçue pour allouer des associations SA négociées parmi les modules à procédure de sécurité et pour notifier cette allocation aux modules à procédure de sécurité et le ou les réexpéditeur(s) IP, d'où il résulte que le ou les réexpéditeur(s) IP peut ou peuvent envoyer des paquets IP au module à procédure de sécurité mettant en oeuvre l'association SA associée.

2. Dispositif selon la revendication 1, dans lequel les modules à procédure de sécurité sont reliés les uns aux autres pour permettre la réexpédition d'un paquet IP d'un module à procédure de sécurité à l'autre.

3. Dispositif selon la revendication 1 ou 2, dans lequel l'unité de commande de sécurité est responsable de la création et de la modification de filtres de paquets IP dans le ou les réexpéditeurs IP dans lequel les filtres sont responsables de l'acheminement de paquets IP vers les modules à procédure de sécurité.

4. Dispositif selon la revendication 3, dans lequel le filtrage de paquets est effectué en utilisant un ou plusieurs sélecteurs, le ou l'un des sélecteurs étant l'Index de Paramètre de Sécurité (SPI) qui identifie une association SA et qui est contenu dans un en-tête des paquets IP.

5. Dispositif selon l'une quelconque des revendications précédentes, dans lequel l'unité de commande de sécurité est reliée à un module d'Echange de Clé Interne (IKE) qui est responsable de la négociation d'associations SA avec des modules IKE homologues, et l'unité de commande de sécurité est conçue pour recevoir du module IKE des détails concernant les associations SA négociées.

6. Dispositif selon l'une quelconque des revendications précédentes, dans lequel le ou les réexpéditeur(s) IP, les modules à procédure de sécurité, et/ou l'unité de commande de sécurité sont mis en oeuvre sous forme logicielle ou matérielle, ou d'une combinaison de formes matérielle et logicielle.

7. Procédé de traitement de paquets IP dans un dispositif de mise en réseau, le procédé consistant à :
allouer, dans une unité de commande de sécurité, des associations de sécurité négociées, ou SA, parmi une pluralité de modules à procédure de sécurité conçus pour mettre en oeuvre des procédures de sécurité pour des paquets IP reçus en parallèle ;
notifier ladite allocation aux modules à procédure de sécurité et à au moins un réexpéditeur IP ; et
recevoir des paquets IP sur le ou les réexpéditeur(s) IP, identifiant les associations SA associées aux paquets, et réexpédier les paquets aux modules à procédure de sécurité mettant en oeuvre les associations SA associées.
